# EUROPÄISCHE PATENTSCHRIFT

(11) **EP 3 867 085 B1**
(45) Veröffentlichungstag und Bekanntmachung des Hinweises auf die Patenterteilung: **04.01.2023**
(21) Anmeldenummer: 19770047.9
(22) Anmeldetag: 17.09.2019
(51) Int. Cl.: B60G 7/00, F16C 11/06

(54) **LENKER MIT ZUMINDEST EINEM GELENK FÜR EINE RADAUFHÄNGUNG SOWIE VERFAHREN ZUR MONTAGE EINES GELENKS AN EINEM LENKER**
ARM WITH AT LEAST A JOINT FOR A WHEEL SUSPENSION AND METHOD FOR ASSEMBLING A JOINT TO AN ARM
BRAS AVEC AU MOINS UNE ARTICULATION POUR UNE SUSPENSION DE ROUE ET PROCÉDÉ DE MONTAGE D'UNE ARTICULATION À UN BRAS

(30) Priorität: 15.10.2018 DE 102018217643
(43) Veröffentlichungstag der Anmeldung: 25.08.2021
(73) Patentinhaber: ZF Friedrichshafen AG, 88046 Friedrichshafen (DE)
(72) Erfinder: BRONSWICK, Philipp, 49179 Ostercappeln (DE); SIEVE, Manfred, 49393 Lohne (DE); PABST, Jan, 49082 Osnabrück (DE)
(74) Vertreter: ZF Friedrichshafen AG
(86) Internationale Anmeldenummer: PCT/EP2019/074797
(87) Internationale Veröffentlichungsnummer: WO 2020/078641

(56) Entgegenhaltungen:
- EP-A1- 2 266 821
- WO-A1-03/052284
- DE-A1-102015 220 757
- FR-A1- 2 858 673

## Beschreibung

Die Erfindung betrifft einen Lenker mit den Merkmalen des Oberbegriffes des Anspruchs 1 sowie ein Verfahren für die Montage eines Gelenks an einem Lenker einer Radaufhängung mit den Merkmalen des Oberbegriffes des Anspruchs 12

Ein Lenker und ein Verfahren mit den Merkmalen der Oberbegriffe der Ansprüche 1 und 12 sind aus der DE 10 2015 220 757 A1 bekannt.

Fahrwerkbauteile, insbesondere Gelenke der eingangs genannten Art, haben unter anderem die Aufgabe, das Fahrgestell eines Fahrzeugs federnd auf dessen Fahrzeugrädern zu lagern. Die Komponenten des Fahrgestells passen sich dabei der Fahrbahnbeschaffenheit und dem jeweiligem Fahrzustand an, sodass dem Fahrzeuginsassen eine hohe Sicherheit geboten wird. Eine wichtige Rolle spielen dabei die Gelenke und Lenker, welche die Aufgabe der Radaufhängung übernehmen und eine Lenkung ermöglichen.

Bekannt ist, mittels einer externen Höhenstandssensorik, welche den Einfederweg an der Vorderachse und der Hinterachse eines Fahrzeugs erfasst, den Zustand oder die Winkelstellung von Fahrwerkbauteilen zu erfassen. Beispielsweise kann mit einer Höhenstandserfassung eine Leuchtweitenregulierung realisiert werden. Ferner kann durch eine elektrische Auswerteeinrichtung und/oder eine Sensoreinrichtung die Winkelstellung eines Gelenks aufgenommen werden. Durch die Auswertung der dadurch gelieferten Daten kann die Höhenstandserfassung realisiert oder mittels einer aktiven Fahrwerksregelung die Dämpfung eines Fahrzeugs den Straßenbedingungen angepasst werden. Um eine elektrische Aufnahmeeinheit in einem Fahrwerkbauteil, beispielsweise in einem Gelenk, zu integrieren, bedarf es eines Bauraums für die zugehörigen elektrischen Komponenten und deren Kabelführung. Insbesondere misst ein Magnetfeldsensor den Winkel beispielsweise zwischen einem kugelförmigen Gelenckörper eines ersten Gelenkteils und einem Gehäuse eines zweiten Gelenkteils des Gelenks, indem der Magnetfeldsensor, verbaut in einem Verschlussdeckel des Gehäuses, das Magnetfeld eines in dem Gelenkkörper befindlichen Magneten auswertet. Aus der DE 10 2010 028 232 A1 ist ein Gelenk der vorstehend genannten Art bekannt. Auf dem Gelenkkörper des ersten Gelenkteils wird eine Kugelschale montiert, welche der Lagerung des ersten Gelenkteils in dem Gelenkgehäuse des zweiten Gelenkteils dient. Derart ausgestaltete Gelenke weisen somit einen hohen Montageaufwand auf. Zudem ist der Abstand zwischen dem Sensorelement und dem Magneten wegen der Befestigung an dem Verschlussdeckel vergleichsweise groß, wodurch die Genauigkeit der Messung der Winkelstellung beeinflusst wird.

Ausgehend vom vorstehend beschriebenen Stand der Technik ist es nun die Aufgabe der vorliegenden Erfindung, ein Gelenk, einen Lenker sowie ein Verfahren für die Montage eines Gelenks an einem Lenker der eingangs genannten Art derart weiterzubilden, dass eine Vereinfachung der Montage erreicht wird.

Diese Aufgabe wird aus vorrichtungstechnischer Sicht mittels eines Lenkers ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des nebengeordneten Anspruchs 12 in Verbindung mit dessen kennzeichnenden Merkmalen.

Die auf die unabhängigen Ansprüche folgenden, abhängigen Ansprüche geben jeweils vorteilhafte Weiterbildungen der Erfindung wieder.

Gemäß der Erfindung wird ein Lenker mit zumindest einem Gelenk für eine Radaufhängung eines Kraftfahrzeugs vorgeschlagen, wobei das zumindest eine an dem Lenker angeordnete Gelenk zwei beweglich miteinander verbundenen Gelenkteilen, einem einen kugelförmigen Gelenkkörper aufweisenden ersten Gelenkteil und einem den Gelenkkörper dreh- und schwenkbar aufnehmenden zweiten Gelenkteil aufweist, wobei an dem Gelenk eine Sensoreinrichtung zur Bestimmung der relativen Lage der beiden Gelenkteile zueinander angeordnet ist. Zur Vereinfachung der Montage eines solchen Gelenks ist erfindungsgemäß vorgesehen, dass die Sensoreinrichtung zumindest ein Sensorelement umfasst, welches in ein im Montagespritzgussverfahren hergestelltes Gelenkgehäuse integrierbar ist, wobei das Gelenkgehäuse den zweiten Gelenkteil ausbildet, in welchem der kugelförmige Gelenkkörper unmittelbar gelagert ist. Das als das zweite Gelenkteil ausgebildete Gelenkgehäuse nimmt dabei zumindest das erste Gelenkteil während der Herstellung auf. Hierdurch entfällt der Montageschritt des Einpressens des ersten Gelenkteiles in das Gelenkgehäuse. Zugleich dient das zweite Gelenkteil der unmittelbaren Lagerung des kugelförmigen Gelenckörpers des ersten Gelenkteils, so dass die Verwendung einer Kugelschale entfallen kann. Der Gelenkkörper des ersten Gelenkteils ist relativ zu dem Lenker in zumindest einem Aufnahmeabschnitt des Lenkers positioniert, wobei zumindest der Gelenkkörper des ersten Gelenkteils umspritzt ist, wobei mit dem Umspritzen das Gelenkgehäuse hergestellt ist, wobei der zumindest eine Aufnahmeabschnitt von abschnittsweise parallel zueinander verlaufenden Wandsegmenten des Lenkers gebildet wird, welche im Wesentlichen koaxial angeordnete Augen aufweisen, in denen zumindest das erste Gelenkteil vor dem Umspritzen positioniert ist, wobei das Gelenkgehäuse zumindest abschnittsweise die beiden Wandsegmente umschließt.

Gemäß einer Ausgestaltung kann das zumindest eine Sensorelement in das Gelenkgehäuse eingespritzt sein. Das zumindest eine Sensorelement wird dabei in den Herstellprozess des Gelenkgehäuses unmittelbar integriert, so dass ein weiterer Montageschritt entfallen kann.

Alternativ kann zur Anordnung des zumindest einen Sensorelementes zumindest eine Aufnahme an dem Gelenkgehäuse angeformt sein. Die Ausbildung der zumindest einen Aufnahme lässt sich ebenfalls in den Herstellprozess des Gelenkgehäuses integrieren. Das zumindest eine Sensorelement kann im Anschluss an den Montagespritzgussvorgang in der Aufnahme angeordnet werden. Gegenüber der Anordnung gemäß dem Stand der Technik verbleibt der Vorteil, dass die Montageschritte des Aufschiebens einer Kugelschale auf den Gelenkkörper des ersten Gelenkelements und das anschließende Einpressen in das Gehäuseelement entfallen. Da sich die Aufnahme unmittelbar in dem Gelenkgehäuse befindet, lässt sich zudem gegenüber dem Stand der Technik ein geringer Abstand zwischen dem zumindest einen Sensorelement und dem Gelenkkörper realisieren.

Insbesondere kann das zumindest eine Sensorelement als ein magnetoresistiver Sensor ausgeführt ist.

Hierbei kann in einer Ausnehmung an der Oberfläche des Gelenkkörpers ein Positionsmagnet eingelassen sein, der dem Sensorelement zugeordnet ist.

Vorteilhaft ist, dass das Sensorelement zur Abdichtung der Ausnehmung des darin angeordneten Positionsmagneten eingerichtet sein kann. Auf diese Weise kann beim Montagespritzguss verhindert werden, dass Material in den Bereich der Ausnehmung sowie zwischen den Positionsmagneten und das Sensorelement gelangt. Hierzu kann an der der Aufnahme zugewandten Seite des Sensorelementes ein Abdeckelement vorgesehen sein. Das Abdeckelement weist vorzugsweise eine mit der Form der Ausnehmung korrespondiere Kontur auf. Somit kann das Abdeckelement die Ausnehmung an den Rändern überlappen. Zugleich kann das Sensorelement durch das Abdeckelement zu dem Positionsmagneten geringfügig beabstandet positioniert werden. Das Sensorelement mit dem Abdeckelement wird vor dem Umspritzen gegen die Oberfläche des Gelenkkörpers gepresst. Die Ausrichtung des Sensorelementes erfolgt lotrecht zu der Ausnehmung, so dass das Abdeckelement die Ausnehmung vollständig abdichtet.

Das Ausbilden des Gelenkgehäuses als unmittelbares Lager des Gelenkkörpers bietet darüber hinaus die Möglichkeit, eine Sensoranordnung zu verwenden, die auf einem alternativen Messverfahren basiert. So kann das Sensorelement der Sensoranordnung als ein Inkrementalgeber ausgeführt sein. Die erfindungsgemäße Ausgestaltung des im Montagespritzgussverfahren hergestellten und auf dem Gelenkkörper des ersten Gelenkteils aufgebrachten Gelenkgehäuses ermöglicht die Verwendung eines als Inkrementalgeber ausgeführten Sensorelementes als eine Alternative zu der Verwendung eines magnetoresistiven Sensors. Die Anwendung eines anderen Messverfahrens wird dadurch ermöglicht, dass wegen der unmittelbaren Lagerung des Gelenkkörpers in dem zweiten Gelenkteil der Abstand zwischen dem Gelenkkörper und dem in das Gelenkgehäuse integrierte Sensorelement minimiert werden kann. Dies ist insbesondere dann der Fall, wenn das zumindest eine Sensorelement in das Gelenkgehäuse eingespritzt wird.

Bevorzugt kann das als Inkrementalgeber ausgeführte Sensorelement zur photoelektrischen Abtastung oder zur magnetischen Abtastung eingerichtet sein. Dabei kann der zur photoelektrischen Abtastung eingerichtete Inkrementalgeber nach einem abbildenden Messprinzip oder einem interferentiellen Messprinzip arbeiten. Der Eingriff in die Lauffläche kann dabei bei der Verwendung eines Inkrementalgebers als Sensor minimiert werden.

Hierzu kann auf der Oberfläche des Gelenkkörpers eine in Umfangsrichtung verlaufende Maßverkörperung vorgesehen sein. Die Maßverkörperung ist entsprechend der Ausgestaltung respektive des angewandten Messprinzips des Inkrementalgebers ausgeführt. Die Maßverkörperung kann im Wesentlichen band- oder streifenförmig ausgebildet sein. Die Maßverkörperung kann sich zumindest abschnittsweise in Umfangsrichtung über die Lauffläche erstrecken. Vorteilhaft ist dabei, dass die Maßverkörperung in einer Weise in den Gelenkkörper einbringbar ist, dass diese nahezu oder keine Unregelmäßigkeiten auf der Oberfläche des Gelenkkörpers aufweist. Das Positionieren des zumindest einen Sensorelementes kann mit einem weiter verringerten Abstand erfolgen, als dies bei einem magnetoresistiven Sensor der Fall ist. Auch das dabei erforderliche Abdichten des Positionsmagneten durch das Sensorelement kann entfallen.

So kann die Maßverkörperung als ein Polrad, ein Magnetband oder als ein Strichcode ausgeführt sein. So kann das Magnetband in eine auf der Oberfläche des Gelenkkörpers eingearbeitete Nut eingelassen sein. Denkbar ist auch, das Magnetband oder das Polrad auf der Oberfläche des Gelenkkörpers aufzukleben. Eine als Strichcode ausgeführte Maßverkörperung kann ebenfalls in eine Nut eingelassen oder auf der Oberfläche des Gelenkkörpers aufgeklebt werden. Dabei kann die Tiefe der Nut so gewählt sein, dass die Maßverkörperung nahezu bündig oder bündig mit der angrenzenden Oberfläche der Lauffläche abschließt. Zudem kann der im Wesentlichen band- oder streifenförmige ausgeführte Strichcode durch Rändelung, Gravur oder Lasern zumindest abschnittsweise umlaufend in die Oberfläche des Gelenkkörpers eingearbeitet werden. Die Tiefe der Nut ist gegenüber der Tiefe der Ausnehmung zur Aufnahme des Positionsmagneten deutlich geringer, so dass eine geringere Schwächung des Gelenkkörpers vorliegt.

Bevorzugt kann das Gelenk als Kugelgelenk oder als Hülsengelenk ausgebildet sein.

Der Lenker ist bevorzugt als ein Stanz-Biege-Teil ausgeführt, welcher zumindest einen Aufnahmeabschnitt für ein erfindungsgemäßes Gelenk aufweist. Der zumindest eine Aufnahmeabschnitt wird von zumindest abschnittsweise parallel zueinander verlaufenden Wandsegmenten des Lenkers gebildet, welche im Wesentlichen koaxial angeordnete Augen aufweisen. Die Augen dienen der Aufnahme des Gelenks. Ferner betrifft die Erfindung ein Verfahren für die Montage eines Gelenks an einem Lenker einer Radaufhängung, wobei das Gelenk zwei Gelenkteile umfasst, ein einen kugelförmige Gelenkkörper aufweisenden ersten Gelenkteil, welches mit einem den Gelenkkörper dreh- und schwenkbar aufnehmenden zweiten Gelenkteil verbunden wird, wobei an dem Gelenk eine zumindest ein Sensorelement umfassende Sensoreinrichtung zur Bestimmung der relativen Lage der beiden Gelenkteile zueinander angeordnet wird, wobei in einem ersten Schritt der Gelenkkörper des ersten Gelenkteils relativ zu dem Lenker in zumindest einem Aufnahmeabschnitt des Lenkers positioniert wird und dass in einem zweiten Schritt zumindest der Gelenkkörper des ersten Gelenkteils umspritzt wird, wobei mit dem Umspritzen das zweite Gelenkgehäuse, welches das zweite Gelenkteil ausbildet, hergestellt wird, in welchen das zumindest eine Sensorelement integriert wird und in welchem der kugelförmige Gelenckörper unmittelbar gelagert wird.

Bevorzugt kann das zumindest eine Sensorelement vor dem Umspritzen relativ zu dem Gelenkkörper des ersten Gelenkteils positioniert werden. Das zumindest eine Sensorelement kann somit in das sich während des Umspritzens ausbildende Gelenkgehäuse integriert werden. Auf diese Weise entfällt der Montageschritt der Anbringung des zumindest einen Sensorelementes an dem Gelenkgehäuse.

Dabei wird erfindungsgemäß der zumindest eine Aufnahmeabschnitt von abschnittsweise parallel zueinander verlaufenden Wandsegmenten des Lenkers gebildet, welche im Wesentlichen koaxial angeordnete Augen aufweisen, in denen zumindest das erste Gelenkteil vor dem Umspritzen positioniert wird. Das beim anschließenden Umspritzen zumindest des Gelenkkörpers des ersten Gelenkteils hergestellte Gelenkgehäuse umschließt dabei auch die beiden Wandsegmente zumindest abschnittsweise. Vorteilhafte Ausführungsformen der Erfindung, die nachfolgend erläutert werden, sind in den Zeichnungen dargestellt. Es zeigt:
- Fig. 1: eine perspektivische Teilansicht eines Lenkers;
- Fig. 2: eine perspektivische Teilansicht gemäß Fig. 1 mit einem in dem Lenker positionierten ersten Gelenkteil eines Hülsengelenkes;
- Fig. 3: eine perspektivische Teilansicht gemäß Fig. 2 mit einem durch Umspritzen des ersten Gelenkteils ausgebildeten Gelenkgehäuses;
- Fig. 4: eine perspektivische Teilansicht gemäß Fig. 3 mit einem in das Gelenkgehäuse integrierten Sensorelement;
- Fig. 5: eine perspektivische Ansicht des ersten Gelenkteils mit einem im Teilschnitt dargestellten Sensorelement gemäß einer zweiten Ausführungsform vor dem Umspritzen;
- Fig. 6: eine perspektivische Ansicht eines ersten Gelenkteils gemäß einer weiteren Ausführungsform;
- Fig. 7: eine perspektivische Ansicht des ersten Gelenkteils gemäß Fig. 6 mit einer darauf angeordneten Maßverkörperung;
- Fig. 8: eine perspektivische Ansicht des ersten Gelenkteils gemäß Fig. 7 mit einem Sensorelement.

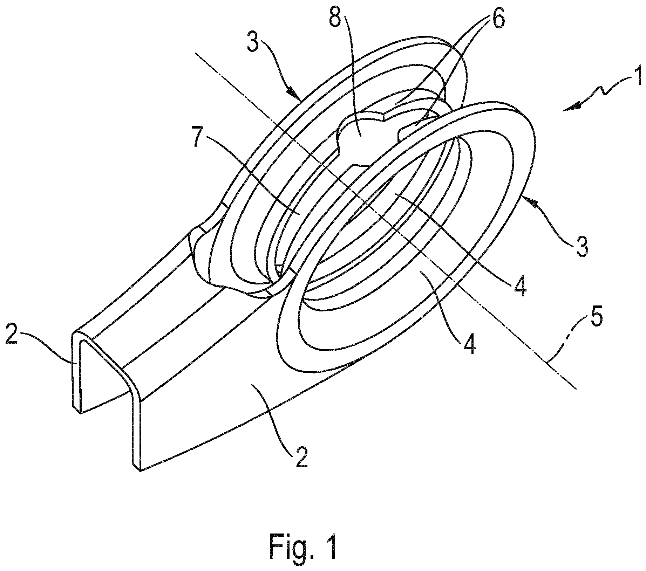

In Fig. 1 ist eine perspektivische Teilansicht eines Lenkers 1 für eine Radaufhängung dargestellt. Der Lenker 1 ist bevorzugt als ein Stanz-Biege-Teil aus einem Metall, insbesondere aus Stahl, ausgeführt. Der als Stanz-Biege-Teil ausgeführte Lenker 1 umfasst zwei parallel zueinander verlaufende Wandabschnitte 2 mit einem U-förmigen Querschnitt. An zumindest einem Ende des Lenkers 1 sind die Wandabschnitte 2 als Aufnahmeabschnitte 3 ausgebildet. Die Aufnahmeabschnitte 3 schließen sich an die U-förmigen Wandabschnitte 2 an und weisen eine im Wesentlichen kreisringförmige Gestalt auf. Die Aufnahmeabschnitte 3 weisen jeweils ein Auge 4 auf, welche koaxial zu einer Symmetrieachse 5 der Aufnahmeabschnitte 3 angeordnet sind. Auf der Innenseite des jeweiligen Aufnahmeabschnittes 3 ist jeweils ein sich in axialer Richtung erstreckender Abschnitt 6 ausgebildet. Die beiden Abschnitte 6 sind durch einen ringförmigen Spalt 7 zueinander beabstandet. Der ringförmige Spalt 7 ist in Umfangsrichtung gesehen an einer Stelle durch eine kreisförmige Aussparung 8 unterbrochen.

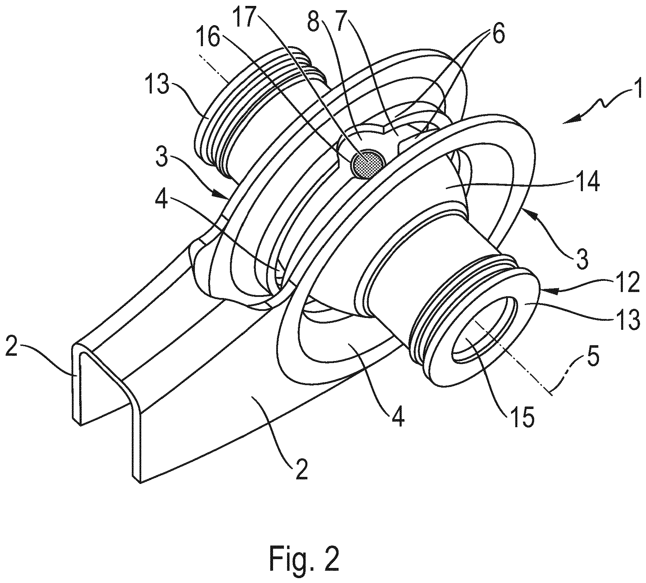

Der Aufnahmeabschnitt 3 dient der Aufnahme eines Gelenks 10, dessen Anordnung in den Aufnahmeabschnitten 3 des Lenkers 1 nachfolgend anhand der Fig. 2 bis 4 beschrieben wird. An dem Gelenk 10 ist eine Sensoreinrichtung zur Bestimmung der relativen Lage zweier Gelenkteile 12, 19 zueinander angeordnet. Durch die im dargestellten Ausführungsbeispiel nach dem magnetoresistiven Effekt arbeitende Sensoranordnung wird eine Winkeländerung der beiden Gelenkteile 12, 19 erfasst, mittels der eine externe Höhenstandssensorik, welche den Einfederweg an einer Vorderachse und einer Hinterachse eines Fahrzeugs erfasst, um den Zustand oder die Winkelstellung von Fahrwerkbauteilen zu erfassen, realisiert werden kann.

In Fig. 2 ist eine perspektivische Teilansicht gemäß Fig. 1 mit einem in dem Lenker 1 positionierten ersten Gelenkteil 12 eines als Hülsengelenk 11 ausgeführten Gelenks 10 dargestellt. Das erste Gelenkteil 12 weist zwei Zapfen 13 sowie einen kugelförmigen Gelenkkörper 14 auf. Die Zapfen 13 und der Gelenkkörper 14 sind mit einer durchgehenden Bohrung 15 versehen. Auf der Oberfläche des Gelenkkörpers 14 ist eine Ausnehmung 16 ausgebildet, welche einen darin befestigten Positionsmagneten 17 aufnimmt.

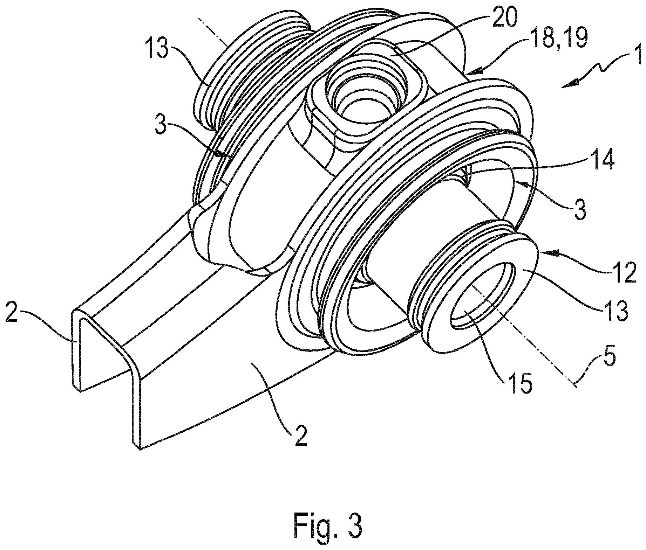

Die Darstellung in Fig. 3 zeigt eine perspektivische Teilansicht gemäß Fig. 2 mit einem durch Umspritzen des Gelenkkörpers 14 des ersten Gelenkteils 12 ausgebildeten Gelenkgehäuses 18. Hierzu werden der Lenker 1 sowie das ersten Gelenkteil 12 relativ zueinander positioniert. Zumindest ein mehrteiliges Werkzeug umgreift den Gelenkkörper 14, weitere ein- oder mehrteilige Werkzeuge können seitlich der Aufnahmeabschnitten 3 positioniert werden. Dies ermöglicht es, den Gelenkkörper 14 sowie abschnittsweise auch der Aufnahmeabschnitte 3 zu umspritzen, um das Gelenkgehäuse18, welches das zweite Gelenkteil 19 des Gelenks 10 bildet, herzustellen. Das zweite Gelenkteil 19 ist aus einem Kunststoff hergestellt. Eine geeignete Formgebung des Werkzeugs ermöglicht es, dass zugleich oberhalb des Positionsmagneten 17 eine Aufnahme 20 an dem Gelenkgehäuse 18 angeformt wird. Die Aufnahme 20 wird dabei abschnittsweise in der Aussparung 8 angeordnet, welche der Lage des Positionsmagneten 17 entspricht.

Die Aufnahme 20 ermöglicht eine Positionierung eines als magnetoresistiver Sensor ausgeführten Sensorelementes 21 mit geringem Abstand zu dem Positionsmagneten 17. Das im Montagespritzgussverfahren hergestellte Gelenkgehäuse 18, welches das zweite Gelenkteil 19 ausbildet, lagert den Gelenkkörper 14 des ersten Gelenkteils 12 unmittelbar. Damit vereinfacht sich die Montage des Gelenks 10 sowie dessen Anbringung an dem Lenker 1. Mit dem Umspritzen zumindest des in dem Lenker 1 positionierten Gelenkkörpers 14 zur Herstellung des Gelenkgehäuses 18 entfällt das Montieren des Gelenkgehäuses 18 in den Aufnahmeabschnitten 3 ebenso wie das Einpressen des ersten Gelenkteils 12 in das Gelenkgehäuse 18. Um zu vermeiden, dass sich aufgrund der Imperfektion der Oberfläche des Gelenkkörpers 14 im Bereich der Ausnehmung 16 für den Positionsmagneten 17 beim Umspritzen diese auf der an dem Gelenkkörper 14 anliegenden Innenfläche des sich ausbildenden Gelenkgehäuses 18 abbildet, kann ein schalenförmiges Element den Gelenkkörper 14 abschnittsweise umschließen und die Ausnehmung 16 und den darin angeordneten Positionsmagneten 17 vollständig abdecken.

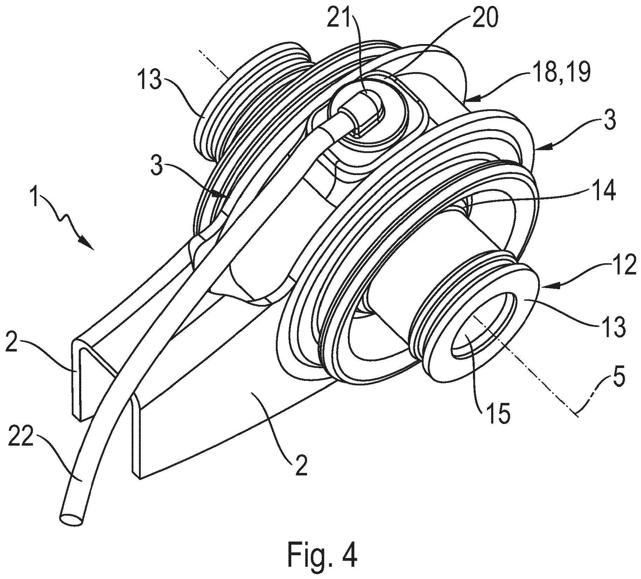

In Fig. 4 ist eine perspektivische Teilansicht gemäß Fig. 3 mit dem in das Gelenkgehäuse 18 integrierten Sensorelement 21 dargestellt. Das zumindest eine Sensorelement 21 wird in die Aufnahme 20 eingebracht und befestigt. Eine Signalleitung 22 verbindet das Sensorelement 21 mit einer externen Steuerungsvorrichtung zur Auswertung der Sensorsignale.

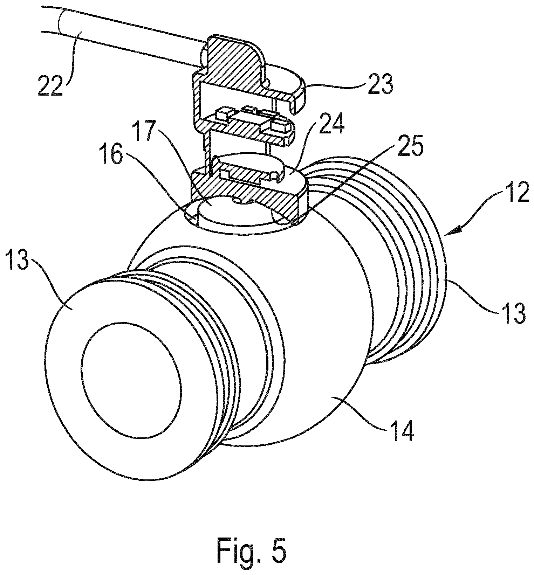

Fig. 5 zeigt eine perspektivische Ansicht des ersten Gelenkteils 12 mit einem im Teilschnitt dargestellten Sensorelement 23 gemäß einer zweiten Ausführungsform vor dem Umspritzen. Das zumindest eine Sensorelement 23 ist ebenfalls als magnetoresistiver Sensor ausgeführt. Im Unterschied zu der Anordnung des Sensorelementes 21 in der dafür ausgebildeten Aufnahme 20 an dem zweiten Gelenkteil 19 wird bei dieser zweiten Ausführungsform das Sensorelement 23 vor dem Montagespritzen zur

Herstellung des Gelenkgehäuses 18 respektive des zweiten Gelenkteils 19 gegenüber dem Gelenkkörper 14 und zusammen mit dem ersten Gelenkteil 12 gegenüber dem Lenker 1 positioniert. Dabei kommt dem Sensorelement 23 die zusätzliche Funktion zu, die Imperfektion der Oberfläche des Gelenkkörpers 14 im Bereich der Ausnehmung 16 für den Positionsmagneten 17 während des Umspritzen des Gelenkkörpers 14 vollständig abzudichten bzw. zu verschließen, so dass beim Montagspritzen kein Material in diesen Bereich gelangt. Hierzu weist das Sensorelement 23 an seiner dem Positionsmagneten 17 zugewandten Seite ein Abdeckelement 24 auf. Das Abdeckelement 24 weist auf ihrer dem Gelenkkörper 14 zugewandten Unterseite 25 eine an die Ausnehmung 16 angepasste Kontur auf. Das Abdeckelement 24 schließt im Wesentlichen bündig mit der Ausnehmung 16 ab. Dadurch kann die erforderliche Beweglichkeit zur Erfüllung der Lagerfunktion des Gelenkgehäuses 18 gewährleistet werden. Der zusätzliche Effekt besteht somit darin, dass der Montageschritt der Anordnung des zumindest einen Sensorelementes 23 entfallen kann. Das Abdichten der Ausnehmung 16 wird beim Positionieren von Lenker 1, erstem Gelenkteil 12 und dem Sensorelement 23 vor dem Umspritzen durchgeführt, indem das Sensorelement 23 an der Ausnehmung 16 gegen den Gelenkkörper 14 gepresst wird.

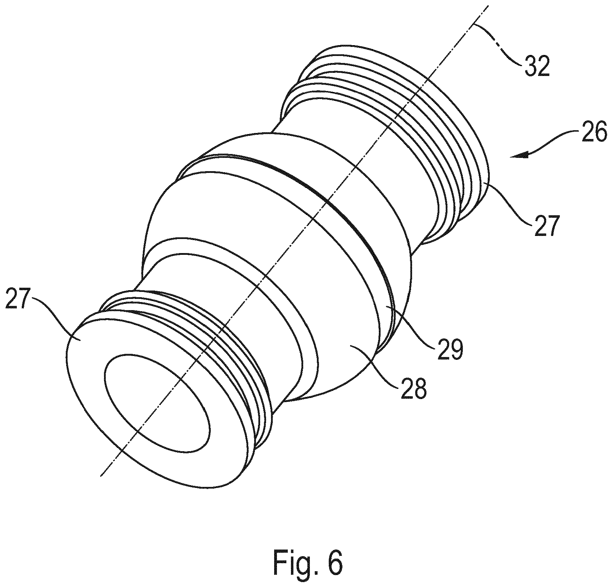

Die Darstellung in Fig. 6 zeigt eine perspektivische Ansicht eines ersten Gelenkteils 26 gemäß einer dritten Ausführungsform. Das erste Gelenkteil 26 umfasst ebenfalls zwei Zapfen 27 sowie einen kugelförmigen Gelenkkörper 28. Das erste Gelenkteil 26 ist aus einem Metall gefertigt. Bei dieser Ausführungsform ist zumindest ein Sensorelement 31 in das Gelenkgehäuse 18 durch das Umspritzen integriert, welches als ein Inkrementalgeber ausgebildet ist. Hierzu kann das zumindest eine als Inkrementalgeber ausgebildete Sensorelement 31 zur magnetischen Abtastung oder zur photoelektrischen Abtastung eingerichtet sein. Eine dafür erforderliche Maßverkörperung 30 kann als ein Polrad oder ein Magnetband bzw. als ein Strichcode ausgeführt sein. Die Anordnung der Maßverkörperung 30 erfolgt in dem dargestellten Ausführungsbeispiel in einer umlaufenden Nut 29 auf der Oberfläche des Gelenkkörpers 28. Die Nut 29 verläuft koaxial zur Längsachse 5 im Bereich des größten Außendurchmessers des Gelenkkörpers 28. Die Tiefe der Nut 29 ist gegenüber der Ausnehmung 16 des Positionsmagneten 17 deutlich geringer, so dass eine geringere Schwächung des Gelenkkörpers 28 vorliegt.

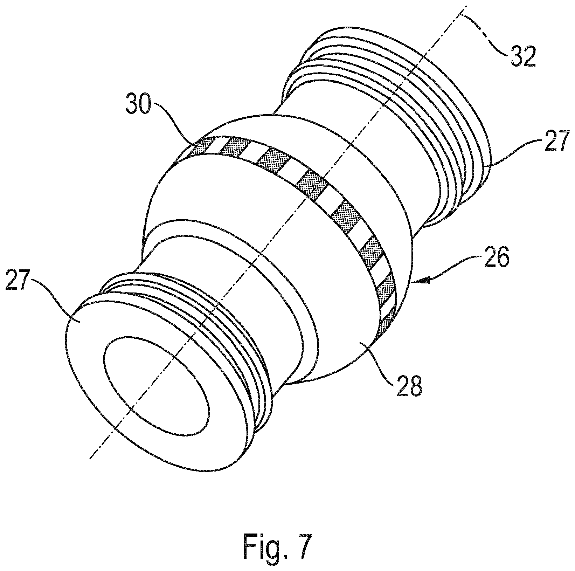

In Fig. 7 ist eine perspektivische Ansicht des ersten Gelenkteils gemäß Fig. 6 mit einer darauf angeordneten Maßverkörperung 30 dargestellt. Wie aus der Darstellung ersichtlich, kann die Nut 29 durch die Maßverkörperung 30 derart ausgefüllt wenden, dass nahezu keine Imperfektionen auftreten.

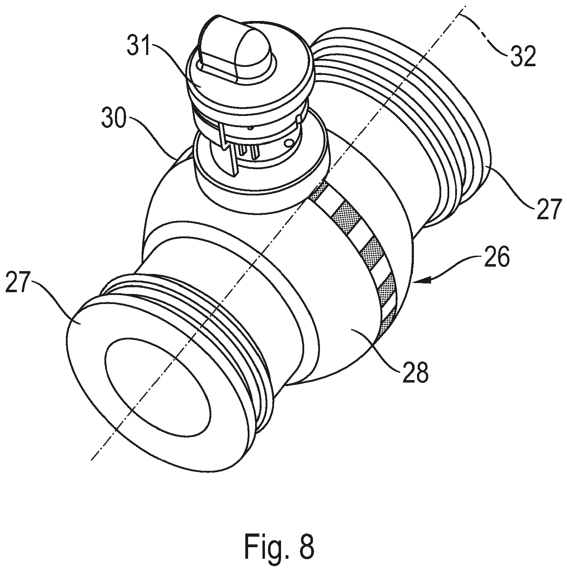

Fig. 8 zeigt eine perspektivische Ansicht des ersten Gelenkteils 26 gemäß Fig. 7 mit dem zumindest einen Sensorelement 31 relativ zu dem Gelenkkörper 28 bzw. der Maßverkörperung 30 positionierten Sensorelement 31. Das Sensorelement 31 kann mit einem minimalen Abstand zur Oberfläche des Gelenkkörpers 28 positioniert werden, bevor zumindest der Gelenkkörper 28 des ersten Gelenkteils 26 mitsamt dem Sensorelement 31 umspritzt werden, wie weiter oben bereits beschrieben wurde.

Eine Ausführung der Maßverkörperung als ein Strichcode kann durch Rändeln, Gravieren oder Lasern auf die Oberfläche des Gelenkkörpers 28 erzeugt werden. Ebenso kann eine Strichcodierung in die Nut eingebracht werden. Im einfachsten Fall kann eine Strichcodierung aufgeklebt werden. Auch bei dieser Ausgestaltung der Maßverkörperung liegt nur ein minimaler Eingriff in die Oberflächenkontur des Gelenkkörpers 28 vor.

### Bezugszeichen

- 1: Lenker
- 2: Wandabschnitt
- 3: Aufnahmeabschnitt
- 4: Auge
- 5: Symmetrieachse
- 6: Abschnitt
- 7: Spalt
- 8: Aussparung
- 10: Gelenk
- 11: Hülsengelenk
- 12: Erstes Gelenkteil
- 13: Zapfen
- 14: Gelenkkörper
- 15: Bohrung
- 16: Ausnehmung
- 17: Positionsmagnet
- 18: Gelenkgehäuse
- 19: Zweites Gelenkteil
- 20: Aufnahme
- 21: Sensorelement
- 22: Signalleitung
- 23: Sensorelement
- 24: Abdeckelement
- 25: Unterseite
- 26: Erstes Gelenkteil
- 27: Zapfen
- 28: Gelenkkörper
- 29: Nut
- 30: Maßverkörperung
- 31: Sensorelement
- 32: Längsachse

## Patentansprüche

1. Lenker (1) mit zumindest einem Gelenk (10) für eine Radaufhängung eines Kraftfahrzeugs, wobei das zumindest eine an dem Lenker (1) angeordnete Gelenk (10) zwei beweglich miteinander verbundenen Gelenkteilen (12, 26; 19), einem einen kugelförmigen Gelenkkörper (14, 28) aufweisenden ersten Gelenkteil (12, 26) und einem den Gelenkkörper (14, 28) dreh- und schwenkbar aufnehmenden zweiten Gelenkteil (19) aufweist, wobei an dem Gelenk (10) eine Sensoreinrichtung zur Bestimmung der relativen Lage der beiden Gelenkteile (12, 26; 19) zueinander angeordnet ist, wobei die Sensoreinrichtung zumindest ein Sensorelement (21, 31) umfasst, welches in ein Gelenkgehäuse (18) integriert ist, wobei das Gelenkgehäuse (18) den zweiten Gelenkteil (19) ausbildet, in welchem der Gelenkkörper (14, 28) unmittelbar gelagert ist, und der Gelenkkörper (14, 28) des ersten Gelenkteils (12, 26) relativ zu dem Lenker (1) in zumindest einem Aufnahmeabschnitt (3) des Lenkers (1) positioniert ist, **dadurch gekennzeichnet, dass** das Gelenkgehäuse (18) in einem Montagespritzgussverfahren hergestellt ist, wobei zumindest der Gelenkkörper des ersten Gelenkteils umspritzt ist, wobei mit dem Umspritzen das Gelenkgehäuse hergestellt ist, wobei der zumindest eine Aufnahmeabschnitt (3) von abschnittsweise parallel zueinander verlaufenden Wandsegmenten (2) des Lenkers (1) gebildet wird, welche im Wesentlichen koaxial angeordnete Augen (4) aufweisen, in denen zumindest das erste Gelenkteil (14, 28) vor dem Umspritzen positioniert ist, wobei das Gelenkgehäuse (18) zumindest abschnittsweise die beiden Wandsegmente (2) umschließt.

2. Lenker (1) nach Anspruch 1, **dadurch gekennzeichnet, dass** das zumindest eine Sensorelement (21, 31) in das Gelenkgehäuse (18) eingespritzt ist.

3. Lenker (1) nach Anspruch 1, **dadurch gekennzeichnet, dass** zur Anordnung des zumindest einen Sensorelementes (21) zumindest eine Aufnahme (20) an dem Gelenkgehäuse (18) angeformt ist.

4. Lenker (1) nach einem der Ansprüche 1 bis 3, **dadurch gekennzeichnet, dass** das zumindest eine Sensorelement (21) als ein magnetoresistiver Sensor ausgeführt ist.

5. Lenker (1) nach Anspruch 4, **dadurch gekennzeichnet, dass** in einer Ausnehmung (16) an der Oberfläche des Gelenkkörpers (14) ein Positionsmagnet (17) eingelassen ist, der dem Sensorelement (21) zugeordnet ist.

6. Lenker (1) nach Anspruch 5, **dadurch gekennzeichnet, dass** das Sensorelement (21) zur Abdichtung der Ausnehmung (16) des darin angeordneten Positionsmagneten (17) eingerichtet ist.

7. Lenker (1) nach einem der Ansprüche 1 bis 6, **dadurch gekennzeichnet, dass** das Sensorelement (31) als ein Inkrementalgeber ausgeführt ist.

8. Lenker (1) nach Anspruch 7, **dadurch gekennzeichnet, dass** das als Inkrementalgeber ausgeführte Sensorelement (31) zur photoelektrischen Abtastung oder zur magnetischen Abtastung eingerichtet ist.

9. Lenker (1) nach Anspruch 7 oder 8, **dadurch gekennzeichnet, dass** auf der Oberfläche des Gelenkkörpers (28) eine in Umfangsrichtung verlaufende Maßverkörperung (30) vorgesehen ist.

10. Lenker (1) nach Anspruch 9, **dadurch gekennzeichnet, dass** die Maßverkörperung (30) als ein Magnetband oder als ein Strichcode ausgeführt ist.

11. Lenker (1) nach einem der Ansprüche 1 bis 10, **dadurch gekennzeichnet, dass** das Gelenk (10) als Kugelgelenk oder als Hülsengelenk ausgebildet ist.

12. Verfahren für die Montage eines Gelenks (10) an einem Lenker (1) einer Radaufhängung, wobei das Gelenk (10) zwei Gelenkteile (12, 26; 19) umfasst, ein einen kugelförmig ausgebildeten Gelenkkörper (14, 28) aufweisendes erstes Gelenkteil (12, 26), welches mit einem den Gelenkkörper (14, 28) dreh- und schwenkbar aufnehmenden zweiten Gelenkteil (19) verbunden wird, wobei an dem Gelenk (10) eine zumindest ein Sensorelement (21, 31) umfassende Sensoreinrichtung zur Bestimmung der relativen Lage der beiden Gelenkteile (12, 26; 19) zueinander angeordnet wird, wobei in einem ersten Schritt der Gelenkkörper (14, 28) des ersten Gelenkteils (12, 26) relativ zu dem Lenker (1) in zumindest einem Aufnahmeabschnitt (3) des Lenkers (1) positioniert wird, **dadurch gekennzeichnet, dass** in einem zweiten Schritt zumindest der Gelenkkörper (14, 28) des ersten Gelenkteils (12, 26) umspritzt wird, wobei mit dem Umspritzen das Gelenkgehäuse (18), welches das zweite Gelenkteil (19) ausbildet, hergestellt wird, in welchem das zumindest eine Sensorelement (21, 31) integriert wird und in welchem der kugelförmige Gelenkkörper (14, 28) unmittelbar gelagert wird, wobei der zumindest eine Aufnahmeabschnitt (3) von abschnittsweise parallel zueinander verlaufenden Wandsegmenten (2) des Lenkers (1) gebildet wird, welche im Wesentlichen koaxial angeordnete Augen (4) aufweisen, in denen zumindest das erste Gelenkteil (14, 28) vor dem Umspritzen positioniert wird, wobei das hergestellte Gelenkgehäuse (18) zumindest abschnittsweise die beiden Wandsegmente (2) umschließt.

13. Verfahren nach Anspruch 12, **dadurch gekennzeichnet, dass** das zumindest eine Sensorelement (21, 31) vor dem Umspritzen relativ zu dem Gelenkkörper (14, 28) des ersten Gelenkteils (12, 26) positioniert wird.

## Claims

1. Arm (1) having at least one joint (10) for a wheel suspension of a motor vehicle, wherein the at least one joint (10) arranged on the arm (1) has two joint parts (12, 26; 19) movably connected to each other, a first joint part (12, 26) having a spherical joint body (14, 28) and a second joint part (19) rotatably and pivotably holding the joint body (14, 28), wherein a sensor device for determining the relative position of the two joint parts (12, 26; 19) relative to each other is arranged on the joint (10), wherein the sensor device comprises at least one sensor element (21, 31), which is integrated in a joint housing (18), wherein the joint housing (18) forms the second joint part (19), in which the joint body (14, 28) is directly supported, and the joint body (14, 28) of the first joint part (12, 26) is positioned relative to the arm (1) in at least one holding section (3) of the arm (1), **characterized in that** the joint housing (18) is produced in an assembly injection-moulding process, wherein at least the joint body of the first joint part is over-moulded, wherein the joint housing is produced by the over-moulding, wherein the at least one holding section (3) is formed by wall segments (2) of the arm (1) which extend parallel to each other in some sections, and which have substantially coaxially arranged eyes (4), in which at least the first joint part (14, 28) is positioned before the over-moulding, wherein the joint housing (18) encloses the two wall segments (2), at least in some sections.

2. Arm (1) according to Claim 1, **characterized in that** the at least one sensor element (21, 31) is injection-moulded into the joint housing (18).

3. Arm (1) according to Claim 1, **characterized in that** in order to arrange the at least one sensor element (21), at least one recess (20) is moulded on the joint housing (18) .

4. Arm (1) according to one of Claims 1 to 3, **characterized in that** the at least one sensor element (21) is formed as a magneto-resistive sensor.

5. Arm (1) according to Claim 4, **characterized in that** a position magnet (17), which is associated with the sensor element (21), is inlaid in a recess (16) on the surface of the joint body (14).

6. Arm (1) according to Claim 5, **characterized in that** the sensor element (21) is configured to seal off the recess (16) of the position magnet (17) arranged therein.

7. Arm (1) according to one of Claims 1 to 6, **characterized in that** the sensor element (31) is formed as an incremental encoder.

8. Arm (1) according to Claim 7, **characterized in that** the sensor element (31) formed as an incremental encoder is configured for photoelectric scanning or for magnetic scanning.

9. Arm (1) according to Claim 7 or 8, **characterized in that** a measurement standard (30) extending in the circumferential direction is provided on the surface of the joint body (28).

10. Arm (1) according to Claim 9, **characterized in that** the measurement standard (30) is formed as a magnetic tape or as a bar code.

11. Arm (1) according to one of Claims 1 to 10, **characterized in that** the joint (10) is formed as a ball joint or as a sleeve joint.

12. Method for the assembly of a joint (10) on an arm (1) of a wheel suspension, wherein the joint (10) comprises two joint parts (12, 26; 19), a first joint part (12, 26) having a spherical joint body (14, 28), which is connected to a second joint part (19) rotatably and pivotably holding the joint body (14, 28), wherein a sensor device comprising at least one sensor element (21, 31) for determining the relative position of the two joint parts (12, 26; 19) relative to each other is arranged on the joint (10), wherein, in a first step, the joint body (14, 28) of the first joint part (12, 26) is positioned relative to the arm (1) in at least one holding section (3) of the arm (1), **characterized in that** in a second step, at least the joint body (14, 28) of the first joint part (12, 26) is over-moulded, wherein the joint housing (18) which forms the second joint part (19), in which the at least one sensor element (21, 31) is integrated and in which the spherical joint body (14, 28) is directly supported, is produced by the over-moulding, wherein the at least one holding section (3) is formed by wall segments (2) of the arm (1) which extend parallel to each other in some sections, and which have substantially coaxially arranged eyes (4), in which at least the first joint part (14, 28) is positioned before the over-moulding, wherein the joint housing (18) produced encloses the two wall segments (2), at least in some sections.

13. Method according to Claim 12, **characterized in that** the at least one sensor element (21, 31) is positioned relative to the joint body (14, 28) of the first joint part (12, 26) before the over-moulding.

## Revendications

1. Bras de suspension (1), comprenant au moins une articulation (10) pour une suspension de roue d'un véhicule automobile, dans lequel ladite au moins une articulation (10) disposée sur le bras de suspension (1) présente deux parties d'articulation (12, 26 ; 19) reliées l'une à l'autre de manière mobile, une première partie d'articulation (12, 26) présentant un corps d'articulation sphérique (14, 28) et une deuxième partie d'articulation (19) recevant le corps d'articulation (14, 28) en rotation et en pivotement, dans lequel un dispositif capteur permettant de déterminer la position relative des deux parties d'articulation (12, 26 ; 19) l'une par rapport à l'autre est disposé sur l'articulation (10), dans lequel le dispositif capteur comprend au moins un élément capteur (21, 31) qui est intégré dans un boîtier d'articulation (18), dans lequel le boîtier d'articulation (18) réalise la deuxième partie d'articulation (19) dans laquelle le corps d'articulation (14, 28) est monté directement, et le corps d'articulation (14, 28) de la première partie d'articulation (12, 26) est positionné par rapport au bras de suspension (1) dans au moins une section de réception (3) du bras de suspension (1),
**caractérisé en ce que** le boîtier d'articulation (18) est fabriqué selon un procédé de moulage par injection de montage, dans lequel au moins le corps d'articulation de la première partie d'articulation est surmoulé, le surmoulage permettant de créer le boîtier d'articulation, dans lequel ladite au moins une section de réception (3) est formée par des segments de paroi (2) du bras de suspension (1), s'étendant par endroits en parallèle l'un à l'autre, présentent des œillets (4) disposés de manière substantiellement coaxiale et dans lesquels au moins la première partie d'articulation (14, 28) est positionnée avant le surmoulage, le boîtier d'articulation (18) entourant au moins par endroits les deux segments de paroi (2).

2. Bras de suspension (1) selon la revendication 1, **caractérisé en ce que** ledit au moins un élément capteur (21, 31) est moulé dans le boîtier d'articulation (18).

3. Bras de suspension (1) selon la revendication 1, **caractérisé en ce que** pour l'agencement du au moins un élément capteur (21), au moins un logement (20) est rapporté au boîtier d'articulation (18).

4. Bras de suspension (1) selon l'une quelconque des revendications 1 à 3, **caractérisé en ce que** ledit au moins un élément capteur (21) est réalisé sous la forme d'un capteur magnétorésistif.

5. Bras de suspension (1) selon la revendication 4, **caractérisé en ce qu'**un aimant de positionnement (17) qui est associé à l'élément capteur (21) est encastré dans un évidement (16) sur la surface du corps d'articulation (14) .

6. Bras de suspension (1) selon la revendication 5, **caractérisé en ce que** l'élément capteur (21) est conçu pour rendre étanche l'évidement (16) de l'aimant de positionnement (17) disposé dans celui-ci.

7. Bras de suspension (1) selon l'une quelconque des revendications 1 à 6, **caractérisé en ce que** l'élément capteur (31) est réalisé sous la forme d'un codeur incrémental.

8. Bras de suspension (1) selon la revendication 7, **caractérisé en ce que** l'élément capteur (31) réalisé sous la forme d'un codeur incrémental est conçu pour un balayage photoélectrique ou pour un balayage magnétique.

9. Bras de suspension (1) selon la revendication 7 ou 8, **caractérisé en ce qu'**une mesure matérialisée (30) s'étendant dans la direction circonférentielle est prévue sur la surface du corps d'articulation (28).

10. Bras de suspension (1) selon la revendication 9, **caractérisé en ce que** la mesure matérialisée (30) est réalisée sous la forme d'une bande magnétique ou d'un code à barres.

11. Bras de suspension (1) selon l'une quelconque des revendications 1 à 10, **caractérisé en ce que** l'articulation (10) est réalisée sous la forme d'un joint à rotule ou d'un joint à douille.

12. Procédé pour le montage d'une articulation (10) sur un bras de suspension (1) d'une suspension de roue, dans lequel l'articulation (10) comprend deux parties d'articulation (12, 26 ; 19), une première partie d'articulation (12, 26) présentant un corps d'articulation sphérique (14, 28) et qui est reliée à une deuxième partie d'articulation (19) recevant le corps d'articulation (14, 28) en rotation et en pivotement, dans lequel un dispositif capteur, comprenant au moins un élément capteur (21, 31), permettant de déterminer la position relative des deux parties d'articulation (12, 26 ; 19) l'une par rapport à l'autre est disposé sur l'articulation (10), dans lequel, dans une première étape, le corps d'articulation (14, 28) de la première partie d'articulation (12, 26), par rapport au bras de suspension (1), est positionné dans au moins une section de réception (3) du bras de suspension (1),
**caractérisé en ce que** dans une deuxième étape, au moins le corps d'articulation (14, 28) de la première partie d'articulation (12, 26) est surmoulé, le surmoulage créant le boîtier d'articulation (18) qui réalise la deuxième partie d'articulation (19) dans laquelle ledit au moins un élément capteur (21, 31) est intégré, et dans laquelle le corps d'articulation sphérique (14, 28) est logé directement,
dans lequel ladite au moins une section de réception (3) est formée par des segments de paroi (2) du bras de suspension (1) s'étendant par endroits en parallèle l'un à l'autre, présentant des œillets (4) disposés de manière substantiellement coaxiale, et dans lesquels au moins la première partie d'articulation (14, 28) est positionnée avant le surmoulage, le boîtier d'articulation (18) fabriqué entourant au moins par endroits les deux segments de paroi (2).

13. Procédé selon la revendication 12, **caractérisé en ce qu'**avant le surmoulage, ledit au moins un élément capteur (21, 31) est positionné par rapport au corps d'articulation (14, 28) de la première partie d'articulation (12, 26).
